# EUROPÄISCHE PATENTSCHRIFT

(11) **EP 1 958 723 B1**
(45) Veröffentlichungstag und Bekanntmachung des Hinweises auf die Patenterteilung: **16.05.2012**
(21) Anmeldenummer: 07021750.0
(22) Anmeldetag: 09.11.2007
(51) Int. Cl.: B23D 47/04, B23D 59/00

(54) **Druckbalken für eine Plattenbearbeitungsanlage**
Pressure beam for a board processing facility
Poutre de pression pour une installation de traitement de plaques

(30) Priorität: 19.02.2007 DE 102007008174
(43) Veröffentlichungstag der Anmeldung: 20.08.2008
(73) Patentinhaber: HOLZMA Plattenaufteiltechnik GmbH, 75365 Calw-Holzbronn (DE)
(72) Erfinder: Gröning, Peter, 75392 Deckenpfronn (DE); Rieger, Klaus, 75328 Schömberg (DE)
(74) Vertreter: Knapp, Thomas

(56) Entgegenhaltungen:
- EP-A- 0 019 292
- EP-A- 0 703 033
- DE-A1- 3 408 079

## Beschreibung

Die Erfindung betrifft einen Druckbalken für eine Plattenbearbeitungsanlage nach dem Oberbegriff des Anspruchs 1. Eine solche Vorrichtung ist aus EP 0 703 033 A1 bekannt.

Vom Markt her bekannt sind Bearbeitungsanlagen in Form von Plattensägen, die einen längs einer Sägelinie beweglichen Sägewagen mit einer daran befestigten Kreissäge aufweisen. Durch die Bewegungsrichtung des Sägewagens wird eine den eigentlichen Bearbeitungsbereich definierende Sägelinie definiert. Oberhalb dieser Sägelinie ist ein vertikal beweglicher Druckbalken angeordnet, der ein zu sägendes Werkstück, beispielsweise einen Plattenstapel oder eine einzelne Platte, während des Sägevorgangs niederhält.

Die bekannte Bearbeitungsanlage umfasst ferner eine Vorschubeinrichtung, an der mehrere Spannzangen befestigt sind. Diese greifen den in Vorschubrichtung gesehen hinteren Rand des Werkstücks und transportieren das Werkstück in Richtung Sägelinie. Damit auch ein gegebenenfalls noch sehr schmaler Randstreifen gesägt werden kann, sind im Druckbalken Spannzangenkanäle vorhanden, in die die Spannzangen in Vorschubrichtung hineinbewegt werden können. Die Spannzangenkanäle sind durch einen Bürstenvorhang abgedichtet, damit Späne und Sägestaub von einer Absaugeinrichtung mit möglichst hohem Wirkungsgrad aus dem Bearbeitungsbereich abgesaugt werden können.

Aufgabe der vorliegenden Erfindung ist es, einen Druckbalken zu schaffen, der mit geringem Aufwand betrieben werden kann und zuverlässig arbeitet.

Diese Aufgabe wird durch einen Druckbalken mit den Merkmalen des Anspruchs 1 gelöst. Vorteilhafte Weiterbildungen sind in Unteransprüchen angegeben. Darüber hinaus finden sich für die Erfindung wesentliche Merkmale in der nachfolgenden Beschreibung und der Zeichnung, wobei die Merkmale auch in unterschiedlichen und nicht explizit genannten Kombinationen für die Erfindung wesentlich sein können.

Erfindungsgemäß ist der Spannzangenkanal nicht mehr unmittelbar in der Struktur des Druckbalkens ausgebildet, sondern in einem separaten Einsatz, der in eine Befestigungsöffnung im Druckbalken eingesetzt ist. Dieser kann bei Verschleiß schnell und einfach ausgetauscht werden, was die erforderliche Standzeit reduziert und hierdurch die Betriebskosten senkt. Außerdem ist der strukturelle Aufbau des Druckbalken einfacher und somit preisgünstiger, da in ihm nur noch die Befestigungsöffnungen vorhanden sein müssen, bei denen es sich um einfache Ausschnitte, bei einem Blechteil beispielsweise durch Ausstanzen hergestellt, handeln kann.

Dennoch kann bei dem erfindungsgemäßen Druckbalken ein auf die Position der Spannzange präzise ausgerichteter und ihrer Form genau entsprechender Spannzangenkanal realisiert werden, da dieser in dem separaten Einsatz ausgebildet ist, der am Druckbalken montiert wird. Bei dem Einsatz kann es sich beispielsweise um ein Kunststoff-Spritzgussteil handeln, um ein Zinkdruckgussteil oder ein Aluminiumteil, oder um ein Teil aus einem faserverstärkten Kunststoff.

Besonders vorteilhaft ist es, wenn an dem Einsatz eine Abdichteinrichtung angeordnet ist, die einen inneren Bereich des Spannzangenkanals mindestens dann, wenn sich keine Spannzange in ihm befindet, wenigstens bereichsweise gegenüber einem äußeren Bereich abdichtet. Damit wird im einfachsten Fall zuverlässig verhindert, dass Teilchen, die beim Bearbeiten des Werkstücks erzeugt und vom Werkzeug umhergeschleudert werden, nach außen treten. In den meisten Fällen wird der Druckbalken jedoch bei einer Bearbeitungsanlage mit Absaugeinrichtung betrieben, die über einen Absaugkanal im Druckbalken solche Teilchen aus dem Bearbeitungsbereich absaugen soll. Durch die erfindungsgemäß vorgesehene Abdichteinrichtung wird deren Wirkungsgrad verbessert. Vor allem bei Verwendung eines Absaugkanals wird durch die Abdichteinrichtung die Luftströmung vergleichmäßigt, es werden Verwirbelungen reduziert, was letztlich eine verbesserte Absaugwirkung zur Folge hat. Die Anordnung der Abdichteinrichtung am Einsatz hat den Vorteil, dass für die Befestigung der Abdichteinrichtung keine aufwändige Manipulation am Druckbalken erforderlich ist. Gegebenenfalls kann die Abdichteinrichtung in einem Arbeitsgang zusammen mit dem Einsatz hergestellt werden, indem sie z.B., bei einem Spritzgussteil, in dieses eingespritzt wird. Dabei versteht sich, dass durch die Abdichteinrichtung im Normalfall keine absolute Dichtheit nach außen hergestellt werden kann, sondern ein Luftstrom vom äußeren zum inneren Bereich reduziert wird.

Ein besonders hervorzuhebender Vorteil der Anordnung der Abdichteinrichtung am Einsatz besteht auch darin, dass die Abdichteinrichtung dann ohne großen Aufwand zum Bearbeitungsbereich benachbart angeordnet werden kann. Toträume im Druckbalken, in denen sich bei der Bearbeitung des Werkstücks anfallende Teilchen ansammeln können, werden auf diese Weise minimiert, was die Zuverlässigkeit im Betrieb des Druckbalkens verbessert.

Einfache Varianten für eine solche Abdichteinrichtung umfassen mindestens einen in den Spannzangenkanal abragenden Bürstenvorhang, ein Silikon- oder Gummielement oder ein um eine Achse federnd bewegliches Türelement.

Da ein solcher Bürstenvorhang im Betrieb der Bearbeitungsanlage einen gewissen Verschleiß erfährt, ist ein einfacher Austausch dann möglich, wenn der Bürstenvorhang in eine Nut im Einsatz austauschbar eingesetzt ist.

Besonders vorteilhaft ist jene Variante eines Druckbalkens, der einen als Sägelinie ausgebildeten Bearbeitungsbereich aufweist, bei dem sich der Einsatz über die Sägelinie hinweg erstreckt und bei der im Bereich der Sägelinie in dem Einsatz ein Schlitz vorhanden ist, durch den sich eine Säge hindurch bewegen kann. Damit kann der Einsatz länger ausgeführt werden, so dass er noch besser im Druckbalken befestigt werden kann.

Der Einsatz kann im Bereich des Schlitzes mindestens eine Absaugöffnung aufweisen, die mit einem Absaugkanal verbunden ist. Auf diese Weise werden Sägespäne auf kürzestem Wege von der Sägelinie und vom Werkstück weg transportiert.

Eine nochmalige Reduktion der Herstellkosten wird erreicht, wenn in dem Einsatz eine Mehrzahl von Spannzangenkanälen ausgebildet ist. Insgesamt sind dann nämlich weniger Teile während der Herstellung der Anlage hand zu haben, und auch der Austausch bei Verschleißt geht schneller vonstatten.

Eine weitere Variante des erfindungsgemäßen Druckbalkens sieht vor, dass der Einsatz in die Befestigungsöffnung eingesteckt und in ihr lösbar befestigt ist. Hierdurch wird der Austausch eines beispielsweise durch Verschleiß nicht mehr optimalen Einsatzes erleichtert.

Nachfolgend werden Ausführungsbeispiele der vorliegenden Erfindung unter Bezugnahme auf die beiliegende Zeichnung näher erläutert. In der Zeichnung zeigen:
- Figur 1: eine schematische Darstellung einer als Säge ausgebildeten Bearbeitungsanlage mit einem Druckbalken;
- Figur 2: eine perspektivische, halbtransparente und aufgebrochene Darstellung einer ersten Ausführungsform des Druckbalkens von Figur 1 mit einem in eine Befestigungsöffnung eingesetzten Einsatz;
- Figur 3: eine Darstellung ähnlich Figur 2 mit einem anderen Betrachtungswinkel;
- Figur 4: eine perspektivische Darstellung von schräg vorne des Einsatzes der Figuren 2 und 3;
- Figur 5: eine perspektivische Darstellung von schräg hinten des Einsatzes der Figuren 2 und 3;
- Figur 6: eine nochmalige Darstellung von schräg vorne des Einsatzes der Figuren 2 und 3;
- Figur 7: eine perspektivische Darstellung von schräg vorne einer alternativen Ausführungsform eines Einsatzes;
- Figur 8: eine perspektivische Darstellung ähnlich Figur 2 einer zweiten Ausführungsform eines Druckbalkens;
- Figur 9: eine perspektivische Darstellung eines Einsatzes des Druckbalkens von Figur 8; und
- Figur 10: eine perspektivische Darstellung einer alternativen Ausführungsform eines Einsatzes.

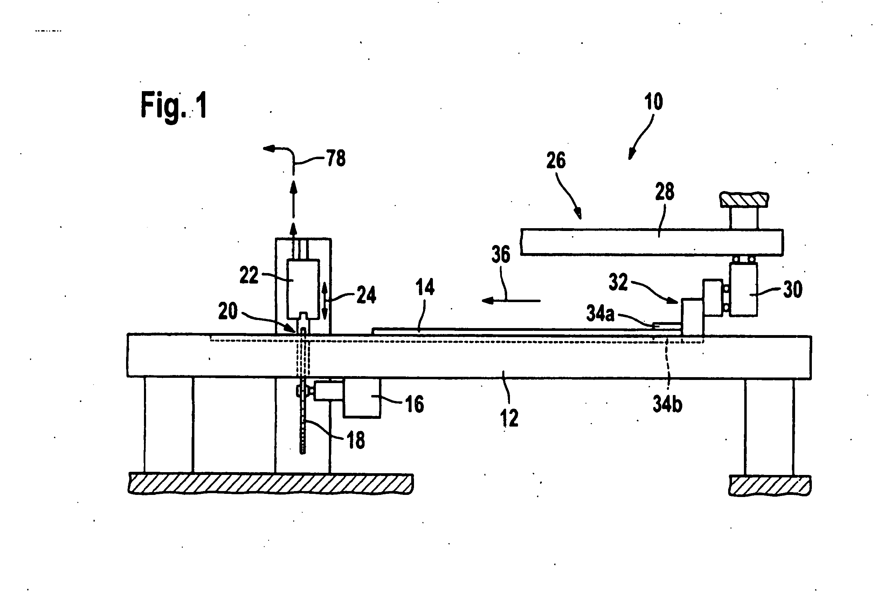

Eine Bearbeitungsanlage für plattenförmige Werkstücke trägt in Figur 1 insgesamt das Bezugszeichen 10. Sie umfasst einen Auflagetisch 12, auf dem ein plattenförmiges Werkstück 14 liegt. Zu der Bearbeitungsanlage 10 gehört ein Sägewagen 16 mit einem Kreissägeblatt 18. Der Sägewagen 16 kann relativ zum Auflagetisch 12 in einer senkrecht zur Zeichnungsebene stehenden Richtung bewegt werden. Im Auflagetisch 12 ist ein gestrichelt gezeichneter Schlitz (ohne Bezugszeichen) vorhanden, durch den das Kreissägeblatt 18 so hindurchragen kann, dass es in einer Arbeitsstellung leicht über die Oberseite des Auflagetisches 12 übersteht. In diesem Bereich wird also das plattenförmige Werkstück 14 im Betrieb vom Kreissägeblatt 18 gesägt, es handelt sich also um einen Bearbeitungsbereich, der auch als "Sägelinie" bezeichnet wird und in Figur 1 das Bezugszeichen 20 trägt.

Oberhalb der Sägelinie 20 ist ein sich senkrecht zur Zeichnungsebene von Figur 1 erstreckender Druckbalken 22 angeordnet, der in vertikaler Richtung (Doppelpfeil 24) bewegt werden kann. Während eines Sägevorganges kann der Druckbalken 22 auf einen im Bereich der Sägelinie 20 befindlichen Abschnitt des plattenförmigen Werkstücks 14 abgesenkt und dieses somit während des Sägevorganges niedergehalten werden.

Die in Figur 1 gezeigte Bearbeitungsanlage umfasst ferner eine Vorschubvorrichtung 26, die ein horizontal verlaufendes Führungssystem 28 und einen an diesem gehaltenen und horizontal beweglichen Laufwagen 30 umfasst. An diesem sind mehrere Spannzangen 32 angebracht, die mittels Klemmarmen 34a und 34b einen in Vorschubrichtung (Pfeil 36) gesehen hinteren Rand des plattenförmigen Werkstücks 14 greifen können.

Im Normalbetrieb der Bearbeitungsanlage 10 befindet sich das Kreissägeblatt 18 zunächst in einer abgesenkten Stellung, es ragt also nicht über die Oberseite des Auflagetisches 12 hinaus. Die Spannzangen 32 haben den hinteren Rand des plattenförmigen Werkstücks 14 gegriffen, und der Laufwagen 30 wird in Vorschubrichtung 36 so bewegt, dass das Werkstück 14 mit der vorgesehenen Schnittlinie im Bereich der Sägelinie 20 liegt. Nun wird der Druckbalken 22 auf das plattenförmige Werkstück 14 abgesenkt, das Kreissägeblatt 18 wird in Drehung versetzt und nach oben bewegt. Durch einen Vorschub des Sägewagens 16 in einer Richtung senkrecht zur Zeichnungsebene von Figur 1 wird der Sägeschnitt durchgeführt. Nach erfolgtem Sägeschnitt wird der Druckbalken 22 angehoben, das Kreissägeblatt 18 wieder auf ein Niveau unterhalb der Oberseite des Auflagetisches abgesenkt und die Vorschubvorrichtung 36 so angesteuert, dass das plattenförmige Werkstück 14 weiter in Vorschubrichtung 36 so bewegt wird, dass die als nächstes vorgesehene werkstückseitige Schnittlinie präzise mit der Sägelinie 20 übereinstimmt. Somit kann ein neuer Sägevorgang beginnen.

Um beim Aufteilen des plattenförmigen Werkstücks 14 möglichst wenig Verschnitt zu erzeugen, ist es gewünscht, dass auch noch sehr schmale Reststreifen zuverlässig gesägt werden können. Dies setzt wiederum voraus, das ein solcher schmaler Reststreifen von den Spannzangen 32 bzw. der Vorschubvorrichtung 26 exakt positioniert werden kann. Hierzu ist es erforderlich, dass die Spannzangen 32 bis dicht an die Sägelinie 20 heranbewegt werden können. Allerdings befindet sich in diesem Bereich auch der Druckbalken 22, der während des Sägevorganges auf den von den Spannzangen 32 gegriffenen schmalen Reststreifen des plattenförmigen Werkstücks 14 herabgelassen werden muss.

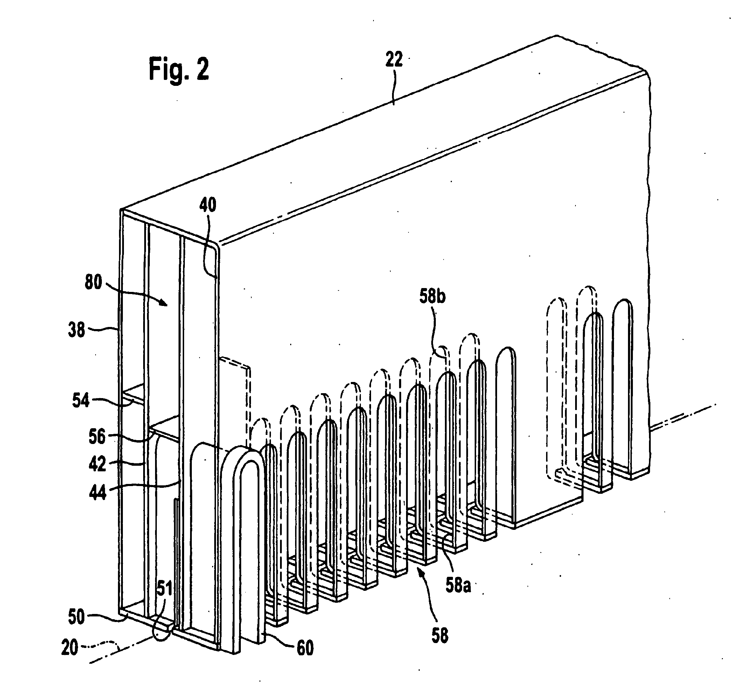

Damit dies möglich ist und sich die Spannzangen 32 und der Druckbalken 22 nicht gegenseitig blockieren, sind in dem Druckbalken 22 sogenannte "Spannzangenkanäle" vorgesehen, bei denen es sich um Öffnungen im Druckbalken 22 handelt, in die die Spannzangen 32 eingreifen können. Dies wird nun für ein erstes Ausführungsbeispiel des Druckbalkens 22 im Detail im Zusammenhang mit den Figuren 2 bis 6 erläutert:

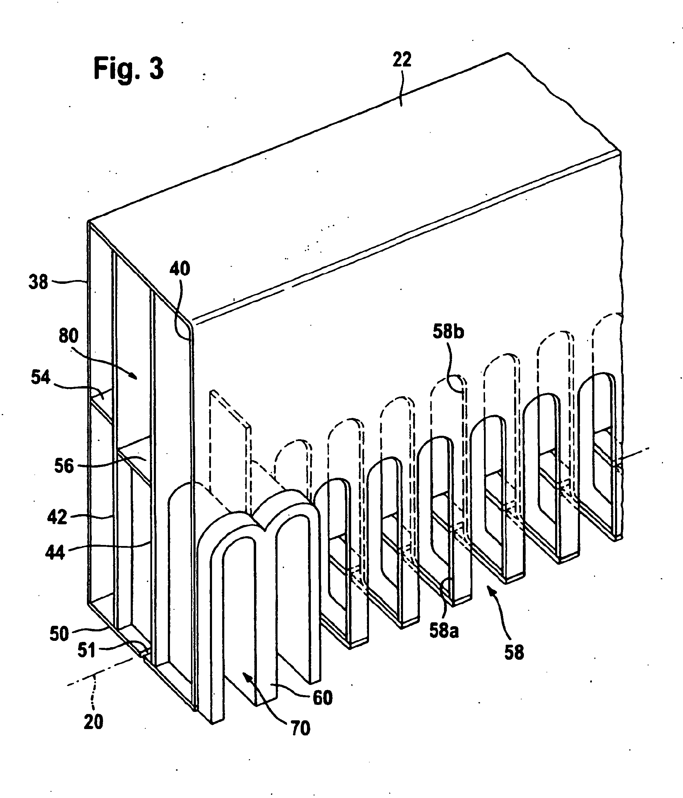

Wie aus den Figuren 2 und 3 ersichtlich ist, ist der Druckbalken 22 im Wesentlichen als Blechkonstruktion aufgebaut. Diese umfasst zwei äußere vertikale Seitenwände 38 und 40 und zwei innere vertikale Trennwände 42 und 44. Nach unten hin ist ein mit einem Längsschlitz 51 versehenes Bodenblech 50 vorgesehen. Zwischen den beiden inneren Wänden 42 und 44 sowie zwischen der inneren Wand 42 und der Seitenwand 38 ist jeweils ein horizontales Trennblech 54 bzw. 56 vorhanden. Auf diese Weise wird durch eine Blechkonstruktion ein aus mehreren Kammern bestehender Druckbalken 22 geschaffen.

In die Seitenwand 40 und die innere Wand 44 sind, jeweils ausgerichtet auf die Position einer Spannzange 32, Befestigungsöffnungen 58a bzw. 58b vorhanden, um denen in Figuren 2 und 3 nur eine mit Bezugszeichen versehen ist. Diese können beispielsweise vorab in das Blech, aus dem die Seitenwand 40 und die Innenwand 44 hergestellt wurden, eingestanzt oder mittels Laser eingebracht werden. Auch in dem Bodenblech 50 sind entsprechende Ausschnitte vorhanden, so dass einer Gesamt-Befestigungsöffnung 58 insgesamt einem nach unten offenen Schlitz ähnelt. Die obere Begrenzung der Befestigungsöffnungen 58a und 58b ist im vorliegenden konkreten Ausführungsbeispiel halbkreisförmig gerundet ausgeführt. Seitlich sind die Befestigungsöffnungen 58 durch vertikale Stegwände 59 voneinander getrennt.

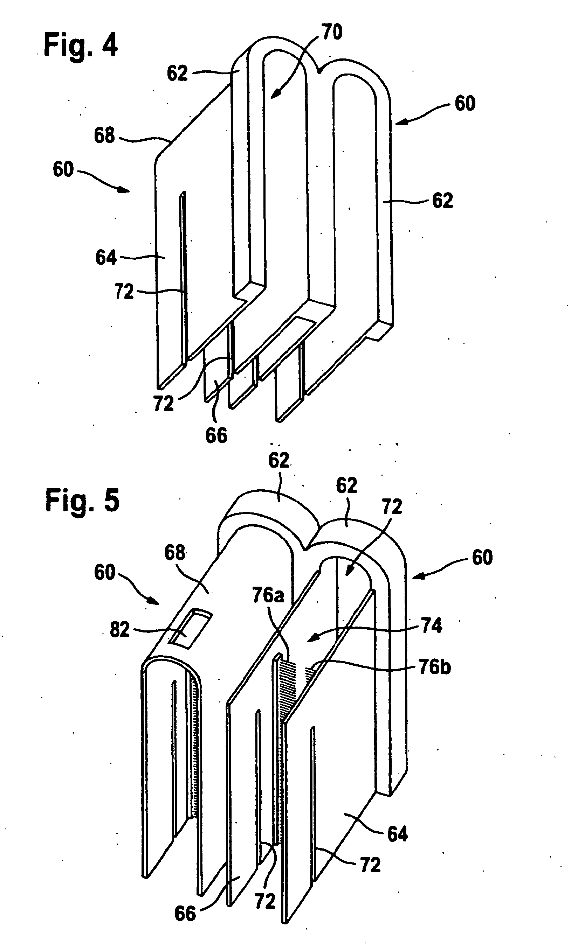

In die Gesamt-Befestigungsöffnungen 58 sind Einsätze 60 eingesetzt, wie sie in den Figuren 4 bis 6 dargestellt sind: Der Einsatz 60 umfasst einen vorderen verstärkten Randbereich 62, dessen Form der Kontur der Gesamt-Befestigungsöffnung 58 in der Seitenwand 40 entspricht. Dieser verstärkte Abschnitt 62 hat also insgesamt "torartige" Gestalt mit einem gewölbten "Torbogen". Unten ist der verstärkte Abschnitt 62 offen. Vom Abschnitt 62 erstrecken sich zwei parallele Seitenwände 64 und 66, die oben durch eine zylindrische Halbschale 68 miteinander verbunden sind (man beachte, dass in Figur 5 die zylindrische Halbschale 68 bei dem von vorne gesehen linken Einsatz 60 aus Darstellungsgründen weggelassen wurde). Auf diese Weise wird in dem Einsatz 60 ein nach unten offener gewölbeartiger Innenraum geschaffen, der, in noch darzustellender Art und Weise, einen Spannzangenkanal 70 bildet.

Man erkennt aus den Figuren 4 bis 6, dass bei der dort gezeigten Ausführungsform zwei Einsätze 60 im Bereich ihres jeweiligen verstärkten Abschnitts 62 einstückig miteinander verbunden sind. Denkbar ist aber auch eine Ausführungsform, bei der jeder Einsatz 60 als separates Teil hergestellt und montiert ist. Ferner geht aus diesen Figuren hervor, dass in den Seitenwänden 66 und 64 eines Einsatzes 60 ein sich vom unteren Rand bis auf ungefähr Dreiviertel der Höhe einer Seitenwand 64 bzw. 66 erstreckender vertikaler Schlitz 72 vorhanden ist. Auf dessen Bedeutung wird weiter unten noch eingegangen werden.

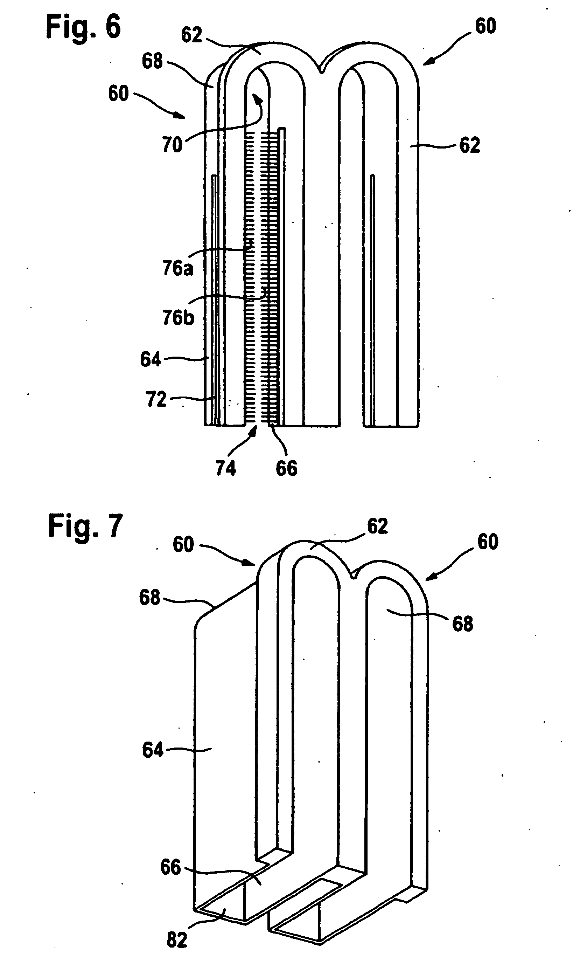

Schließlich ist insbesondere aus den Figuren 5 und 6 ersichtlich, dass an dem Einsatz 60 eine Abdichteinrichtung 74 angeordnet ist. Diese umfasst im vorliegenden Ausführungsbeispiel zwei von den Seitenwänden 64 und 66 in den Spannzangenkanal 70 hinein abragende Bürstenvorhänge 76a und 76b. Beide Bürstenvorhänge 76a und 76b sind dabei zu dem Schlitz 72 benachbart angeordnet. Die beiden Bürstenvorhänge 76a und 76b können an die Seitenwände 64 und 66 angeklebt sein, sie können aber auch in Nuten austauschbar eingesetzt sein. Durch die Abdichteinrichtung 74 wird der Spannzangenkanal 70 in einen inneren Bereich 71a und einen äußeren Bereich 71b aufgeteilt. Die Bedeutung der Abdichteinrichtung 74 wird ebenfalls weiter unten genauer erläutert werden.

Alternativ, aber nicht dargestellt, könnte die Abdichteinrichtung 74 auch ein platten- oder lappenartiges Silikon- oder Gummielement umfassen, welches beim Einfahren einer Spannzange 32 in einen Spannzangenkanal 70 elastisch zur Seite gedrückt wird und beim Ausfahren der Spannzange 32 wieder zurück in seine abragende Schließposition federt. Auch eine starre Klappe oder Türe, die um eine Achse federnd schwenkbar gelagert ist, könnte als Abdichteinrichtung 74 verwendet werden.

Die beiden Einsätze 60 sind so dimensioniert, dass sie exakt in zwei nebeneinander liegende Befestigungsöffnungen 58 in den Druckbalken 22 eingesetzt werden können, wie man beispielsweise in Figur 3 erkennen kann. Dabei sitzt der verstärkte Abschnitt 62 eines Einsatzes 60 auf der Außenseite der Seitenwand 40 auf. Die Seitenwände 64 und 66 und die zylindrische Halbschale 68 eines Einsatzes 60 erstrecken sich über den Längsschlitz 51 im Bereich der Sägelinie 20 (in den Figuren 2 und 3 durch eine strichpunktierte Linie angedeutet) hinweg bis zur inneren Wand 42 des Druckbalkens 22. In dieser Position befindet sich der Schlitz 72 in den beiden Seitenwänden 64 und 66 des Einsatzes 60 exakt auf Höhe des Schlitzes 51 im Bereich der Sägelinie 20.

Im Betrieb der Bearbeitungsanlage 10 kann das Kreissägeblatt 18 bei auf das plattenförmige Werkstück 14 abgesenktem Druckbalken 22 durch den Schlitz 51 im Bodenblech 50 und die Schlitze 72 in den Einsätzen 60 hindurch ohne Behinderung seinen Sägeschnitt längs der Sägelinie 20 durchführen. Die Spannzangen 32 können dabei mit ihren Klemmarmen 34a und 34b in die Spannzangenkanäle 70 in den Einsätzen 60 hineingreifen und auch einen sehr schmalen Reststreifen des plattenförmigen Werkstücks 14 sicher greifen, ohne die Absenkbewegung des Druckbalkens 22 zu behindern. Die Abdichteinrichtung 74 sorgt während des Sägeschnitts dafür, dass Sägestaub und Sägespäne nicht nach außen dringen können.

Durch die Anordnung der Abdichteinrichtung 74 relativ weit vom außen liegenden verstärkten Abschnitt 62 weg und statt dessen zum Schlitz 72 im Bereich der Sägelinie 20 benachbart, wird der innere Bereich 71a im Spannzangenkanal 70, in dem Sägestaub anfällt, kleingehalten. Dadurch, dass die Abdichteinrichtung 74 in Vorschubrichtung 36 gesehen relativ weit innen im Spannzangenkanal 70 liegt, werden die Bürstenvorhänge 76a und 76b von der Spannzange 32 weniger stark verformt bzw. werden überhaupt nur dann verformt, wenn die Klemmarme 34a und 34b bis unmittelbar an die Sägelinie 20 herangebracht werden. Hierdurch wird der Verschleiß der Bürstenvorhänge 76a und 76b verringert.

Besonders vorteilhaft ist die Positionierung der Abdichteinrichtung 74 in der Nähe der Sägelinie 20 dann, wenn die Bearbeitungsanlage über eine Absaugeinrichtung verfügt, mittels der beim Sägeschnitt anfallender Sägestaub und Sägespäne von der Sägelinie 20 weggesaugt werden sollen. Eine solche Absaugvorrichtung ist in Figur 1 durch Pfeile 78 angedeutet. In diesem Fall wäre beispielsweise in den Figuren 1 und 2 der zwischen der inneren Wand 42, dem Trennblech 56, der inneren Wand 44 und der Seitenwand 40 gebildete Raum als Absaugkanal 80 ausgebildet, der über und in der Zeichnung nicht dargestellte Öffnungen im Trennblech 56 und Absaugöffnungen 82 (siehe Figur 5) in den Einsätzen 60 mit dem Spannzangenkanal 70, und zwar dort mit dem einwärts von der Abdichteinrichtung 74 gelegenen inneren Bereich 71a verbunden ist. Durch die Abdichteinrichtung 74 wird der innere Bereich 71a gegenüber dem äußeren Bereich 71b so gut abgedichtet, dass die Absaugung mit hohem Wirkungsgrad arbeitet.

Zur leichten Montage ist der Einsatz 60 in die Befestigungsöffnung 58 mittels einer Clips- oder Rastverbindung lösbar eingesteckt und befestigt. Alternativ könnte er auch geschraubt sein. Der Einsatz 60 kann als Spritzguss- oder Zinkdruckgussteil oder aus Aluminium oder Kunststoff hergestellt sein.

Eine alternative Ausführungsform von Einsätzen 60 ist in Figur 7 dargestellt. Dabei gilt hier und nachfolgend, dass solche Elemente, die äquivalente Funktionen zu bereits beschriebenen Elementen und Bereichen aufweisen, die gleichen Bezugszeichen tragen und nicht nochmals im Detail erläutert sind. Darüber hinaus wird der Einfachheit halber wiederum nur der linke der beiden Einsätze 60 in Figur 7 im Detail beschrieben, der andere, einstückig mit ihm verbundene Einsatz auf der rechten Seite ist identisch aufgebaut.

Die beiden Seitenwände 64 und 66 sowie die zylindrische Halbschale 68 des in Figur 7 gezeigten Einsatzes 60 sind kürzer als jene des in den Figuren 2 bis 6 gezeigten Einsatzes 60. Sie enden nämlich in Einbaulage knapp vor dem Schlitz 51 im Druckbalken 22 bzw. kurz vor der Sägelinie 20, erstrecken sich also nicht über diese hinweg. Der Einsatz 60 von Figur 7 weist darüber hinaus keine Abdichteinrichtung und keine Absaugöffnung auf, sondern eine stirnseitige Endwand 82, mittels der der Spannzangenkanal 70 zur Sägelinie 20 hin abgeschlossen ist.

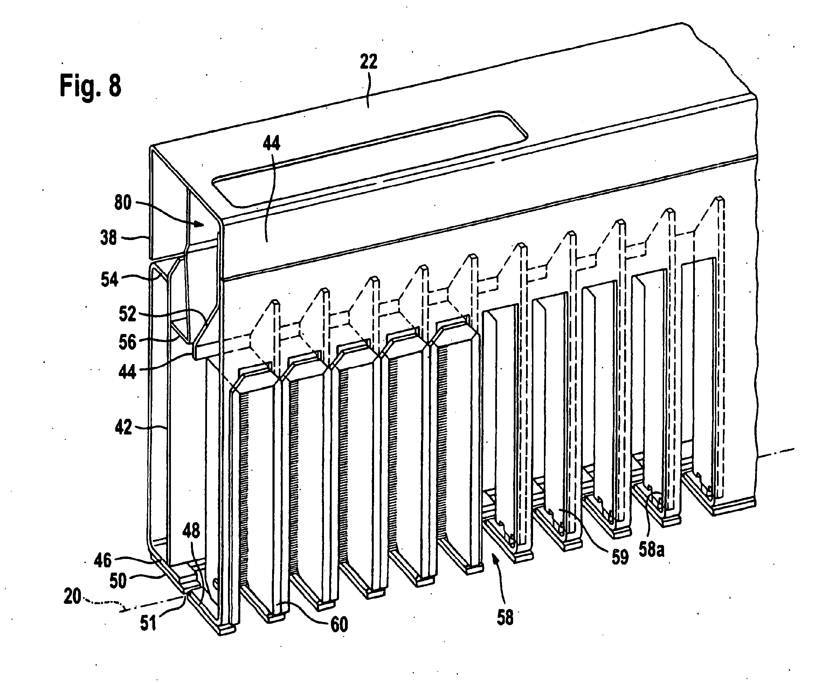

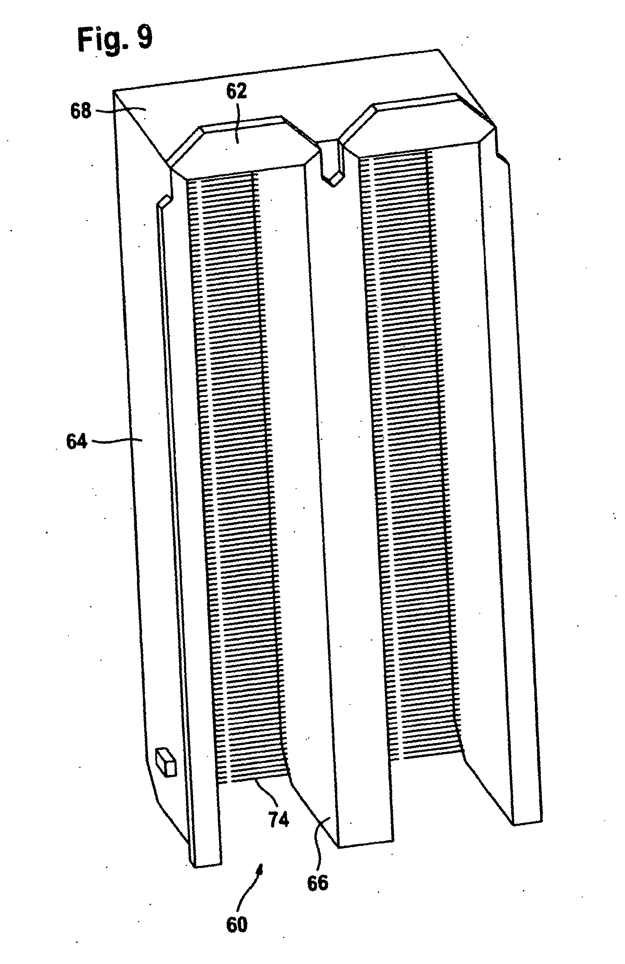

Eine zweite Ausführungsform eines Druckbalkens 22 zeigt Figur 8, einen entsprechenden Einsatz Figur 9. Auch hier erstreckt sich der Einsatz 60 nur bis kurz vor den Schlitz 51 im Druckbalken 22 und weist keine Absaugöffnung auf, jedoch eine Abdichteinrichtung 74. Der obere Bereich des Einsatzes 60 ist nicht zylindrisch, sondern gerade und in Einbaulage üblicherweise im Wesentlichen horizontal (Bezugszeichen 68). Der verstärkte Abschnitt 62 ist als nach außen abragender Steg ausgeführt.

Im Druckbalken 22 besteht die rechte innere Wand nur aus einem kurzen Stummelabschnitt 44, der an der Oberseite des oberen Bereichs 68 des Einsatzes endet.

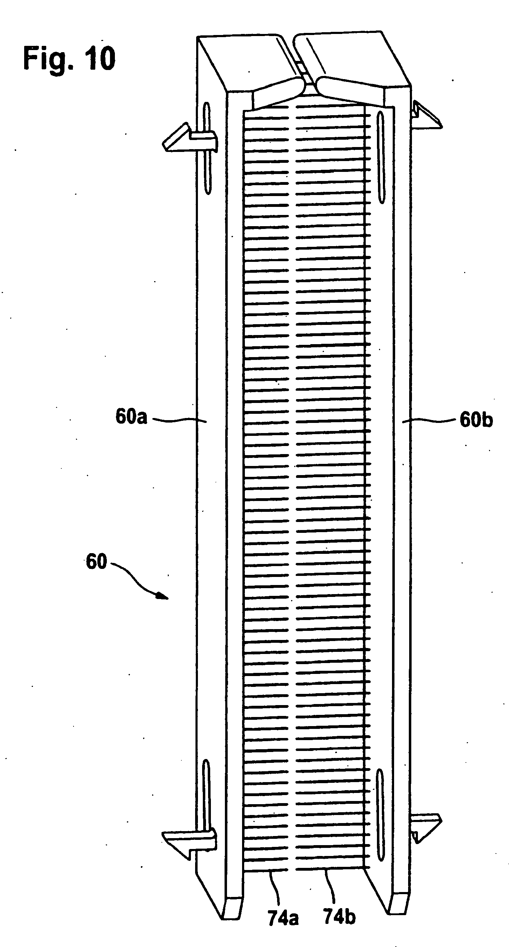

Eine in Figur 10 dargestellte Ausführungsform eines Einsatzes 60 ist mehrteilig: Der Einsatz 60 umfasst eine linken und eine rechte Hälfte 60a und 60b, die unabhängig voneinander in der Befestigungsöffnung befestigbar sind.

## Patentansprüche

1. Druckbalken (22) für eine Plattenbearbeitungsanlage zum Niederhalten eines Werkstücks (14) während des Bearbeitungsvorgangs, wobei an dem Druckbalken (22) mindestens ein Spannzangenkanal (70) vorhanden ist, in den mindestens ein Bereich einer Spannzange (32) hineinbewegt werden kann, **dadurch gekennzeichnet, dass** der Spannzangenkanal (70) in einem Einsatz (60) ausgebildet ist, der in eine Befestigungsöffnung (58) im Druckbalken (22) eingesetzt ist.

2. Druckbalken (22) nach Anspruch 1, **dadurch gekennzeichnet, dass** an dem Einsatz (60) eine Abdichteinrichtung (74) angeordnet ist, die einen inneren Bereich des Spannzangenkanals (70) mindestens dann, wenn sich keine Spannzange (32) in ihm befindet, gegenüber einem äußeren Bereich abdichtet.

3. Druckbalken (22) nach Anspruch 2, **dadurch gekennzeichnet, dass** die Abdichteinrichtung (74) zum Bearbeitungsbereich (30) benachbart angeordnet ist.

4. Druckbalken (22) nach einem der Ansprüche 2 oder 3, **dadurch gekennzeichnet, dass** die Abdichteinrichtung (74) mindestens einen in den Spannzangekanal (70) abragenden Bürstenvorhang (76), ein Silikon- oder Gummielement, oder ein um eine Achse federnd bewegliches Türelement umfasst.

5. Druckbalken (22) nach Anspruch 4, **dadurch gekennzeichnet, dass** der Bürstenvorhang (76) in eine Nut im Einsatz (60) austauschbar eingesetzt ist.

6. Druckbalken (22) nach einem der vorhergehenden Ansprüche, **dadurch gekennzeichnet, dass** der Druckbalken (22) einen Absaugkanal (80) zum Absaugen von Teilchen aus dem Bearbeitungsbereich (20) umfasst.

7. Druckbalken (22) nach einem der vorhergehenden Ansprüche, **dadurch gekennzeichnet, dass** er einen als Sägelinie (20) ausgebildeten Bearbeitungsbereich aufweist, dass sich der Einsatz (60) über die Sägelinie (20) hinweg erstreckt und dass im Bereich der Sägelinie (20) in dem Einsatz (60) mindestens ein Schlitz (72) vorhanden ist, durch den sich ein Sägeblatt (18) hindurchbewegen kann.

8. Druckbalken (22) nach Anspruch 7, **dadurch gekennzeichnet, dass** der Einsatz im Bereich des Schlitzes mindestens eine Absaugöffnung aufweist, die mit einem Absaugkanal (80) verbunden ist.

9. Druckbalken (22) nach einem der vorhergehenden Ansprüche, **dadurch gekennzeichnet, dass** er eine Blechkonstruktion umfasst.

10. Druckbalken (22) nach einem der vorhergehenden Ansprüche, **dadurch gekennzeichnet, dass** mehrere Einsätze (60) einstückig miteinander verbunden oder in einem Einsatz (60) eine Mehrzahl von Spannzangenkanälen ausgebildet ist.

11. Druckbalken (22) nach einem der vorhergehenden Ansprüche, **dadurch gekennzeichnet, dass** der Einsatz (60) in die Befestigungsöffnung (58) eingesteckt und in ihr lösbar befestigt, vorzugsweise verrastet oder verclipst ist.

12. Druckbalken (22) nach einem der vorhergehenden Ansprüche, **dadurch gekennzeichnet, dass** der Einsatz (60) eine Basisstruktur aus Kunststoff, vorzugsweise faserverstärktem Kunststoff, umfasst.

13. Druckbalken (22) nach einem der vorhergehenden Ansprüche, **dadurch gekennzeichnet, dass** der Einsatz (60) mehrteilig ist (60a, 60b).

## Claims

1. A pressure beam (22) for a board processing facility for holding down a workpiece (14) during a processing procedure, in which there is at least one collet chuck conduit (70) on the pressure beam (22), into which conduit at least one region of a collet chuck (32) can be moved, **characterized in that** the collet chuck conduit (70) is embodied in an insert (60) that is inserted into a securing opening (58) in the pressure beam (22).

2. The pressure beam (22) as defined by claim 1, **characterized in that** a sealing device (74) is disposed on the insert (60), which device seals off an inner region of the collet chuck conduit (70), at least whenever no collet chuck (32) is located in there, from an outer region.

3. The pressure beam (22) as defined by claim 2, **characterized in that** the sealing device (74) is disposed adjacent to the processing region (30).

4. The pressure beam (22) as defined by claim 2, **characterized in that** the sealing device (74) includes at least one brush curtain (76), or silicone or rubber element, or door element, that is movable resiliently about an axis and protrudes into the collet chuck conduit (70).

5. The pressure beam (22) as defined by one of claims 1 or 2, **characterized in that** the brush curtain (76) is inserted replaceably into a groove in the insert (60).

6. The pressure beam (22) as defined by one of the foregoing claims, **characterized in that** the pressure beam (22) includes a suction extraction conduit (80) for extracting particles from the processing region (20) by suction.

7. The pressure beam (22) as defined by one of the foregoing claims, **characterized in that** it has a processing region embodied as a sawing line (20); that the insert (60) extends past the sawing line (20); and that in the vicinity of the sawing line (20), there is at least one slot (72) in the insert (60), through which slot a saw blade (18) can move.

8. The pressure beam (22) as defined by claim 7, **characterized in that** in the vicinity of the slot, the insert has at least one suction extraction opening, which communicates with a suction extraction conduit (80).

9. The pressure beam (22) as defined by one of the foregoing claims, **characterized in that** it includes a sheet-metal construction.

10. The pressure beam (22) as defined by one of the foregoing claims, **characterized in that** a plurality of inserts (60) are joined in one piece to one another, or a plurality of collect chuck conduits (70) is embodied in one insert (60).

11. The pressure beam (22) as defined by one of the foregoing claims, **characterized in that** the insert (60) is inserted into the securing opening (58) and is releasably secured, preferably latched or clipped, therein.

12. The pressure beam (22) as defined by one of the foregoing claims, **characterized in that** the insert (60) includes a basic structure comprising plastic, preferably fiber-reinforced plastic.

13. The pressure beam (22) as defined by one of the foregoing claims, **characterized in that** the insert (60) is in multiple parts (60a, 60b).

## Revendications

1. Barre de pression (22) pour une installation de traitement de plaques destinée à retenir une pièce (14) pendant le processus de traitement, au moins un canal de pince de serrage (70) à l'intérieur duquel au moins une zone d'une pince de serrage (32) peut être déplacée étant présent sur la barre de pression (22), **caractérisée en ce que** le canal de pince de serrage (70) est réalisé dans un insert (60) inséré dans une ouverture de fixation (58) dans la barre de pression (22).

2. Barre de pression (22) selon la revendication 1, **caractérisée en ce qu'**un dispositif d'étanchéité (74) étanchéifiant une zone intérieure du canal de pince de serrage (70) par rapport à une zone extérieure au moins lorsqu'aucune pince de serrage (32) ne se situe dans celui-ci est disposé sur l'insert (60).

3. Barre de pression (22) selon la revendication 2, **caractérisée en ce que** le dispositif d'étanchéité (74) est disposé au voisinage de la zone de traitement (30).

4. Barre de pression (22) selon l'une quelconque des revendications 2 ou 3, **caractérisée en ce que** le dispositif d'étanchéité (74) comprend au moins un rideau à brosse (76) faisant saillie dans le canal de pince de serrage (70), un élément en silicone ou en caoutchouc, ou un élément de porte élastiquement mobile autour d'un axe.

5. Barre de pression (22) selon la revendication 4, **caractérisée en ce que** le rideau à brosse (76) est inséré de manière interchangeable dans une rainure dans l'insert (60).

6. Barre de pression (22) selon l'une quelconque des revendications précédentes, **caractérisé en ce que** la barre de pression (22) comprend un canal d'aspiration (80) destiné à aspirer des particules de la zone de traitement (20).

7. Barre de pression (22) selon l'une quelconque des revendications précédentes, **caractérisée en ce qu'**elle comprend une zone de traitement réalisée comme une ligne de sciage (20), **en ce que** l'insert (60) s'étend par-dessus la ligne de sciage (20) et **en ce qu'**au moins une fente (72) à travers laquelle une lame de scie (18) peut se déplacer est présente dans la zone de la ligne de sciage (20) dans l'insert (60).

8. Barre de pression (22) selon la revendication 7, **caractérisée en ce que** l'insert dans la zone de la fente comprend au moins une ouverture d'aspiration reliée à un canal d'aspiration (80).

9. Barre de pression (22) selon l'une quelconque des revendications précédentes, **caractérisée en ce qu'**elle comprend une construction en tôle.

10. Barre de pression (22) selon l'une quelconque des revendications précédentes, **caractérisée en ce que** plusieurs inserts (60) sont reliés les uns aux autres d'une seule pièce ou plusieurs canaux de pince de serrage sont réalisés dans un insert (60).

11. Barre de pression (22) selon l'une quelconque des revendications précédentes, **caractérisée en ce que** l'insert (60) est introduit dans l'ouverture de fixation et y est fixé détachable, de préférence enclenché ou clipsé.

12. Barre de pression (22) selon l'une quelconque des revendications précédentes, **caractérisée en ce que** l'insert (60) comprend une structure de base en matière plastique, de préférence en matière plastique renforcée par des fibres.

13. Barre de pression (22) selon l'une quelconque des revendications précédentes, **caractérisée en ce que** l'insert (60) est constitué de plusieurs parties (60a, 60b).
